# EUROPÄISCHE PATENTSCHRIFT

(11) **EP 1 151 510 B1**
(45) Veröffentlichungstag und Bekanntmachung des Hinweises auf die Patenterteilung: **15.12.2004**
(21) Anmeldenummer: 00965945.9
(22) Anmeldetag: 08.09.2000
(51) Int. Cl.: H02B 1/052, H02B 1/04

(54) **BEFESTIGUNGSVORRICHTUNG FÜR EIN GEHÄUSE**
FIXING DEVICE FOR A HOUSING
DISPOSITIF DE FIXATION POUR UN BOITIER

(30) Priorität: 07.10.1999 DE 19948498
(43) Veröffentlichungstag der Anmeldung: 07.11.2001
(73) Patentinhaber: Moeller GmbH, 53115 Bonn (DE)
(72) Erfinder: FAUST, Manfred, 53757 St. Augustin (DE); DAUER, Klaus, 56075 Koblenz (DE); WINZEN, Lothar, 53572 Unkel (DE); BAUJAN, Günter, 53784 Troisdorf (DE); BAUMEISTER, Rudolf, 53773 Hennef (DE); BLECHACZ, Volker, 53332 Bornheim (DE); WILLERSCHEIDT, Peter, 53424 Remagen (DE)
(86) Internationale Anmeldenummer: PCT/EP2000/008766
(87) Internationale Veröffentlichungsnummer: WO 2001/026196

(56) Entgegenhaltungen:
- WO-A-98/23003
- DE-B- 2 658 933

## Beschreibung

Die Erfindung betrifft eine Befestigungsvorrichtung nach dem Oberbegriff des Anspruches 1.

Aus der Druckschrift DE 296 20 226 U1 ist eine Befestigungsvorrichtung für ein Gehäuse mit einer Schnappvorrichtung zum Aufschnappen auf eine Hutschiene, mit am Gehäusesockel angeformten Schraubaugen zur Befestigung auf einer Platte und mit einem federnd am Gehäusesockel angebrachten Distanzstück bekannt. Derartige Schraubaugen können allerdings durch den Platzbedarf der federnden Schenkel, nicht sehr groß und damit nicht robust ausgeführt werden.

Die DE 26 58 933 B1 offenbart eine Befestigungsvorrichtung für ein Nachrichtenempfangsgerät mittels einer Befestigungsschraube und einer Isolierplatte, die am freien Rand ihres rohrförmigen Ansatzes eine mit einer ringförmigen Wand verstärkte Scheibe enthält, die mittels schmaler Bruchstege an dem rohrförmigen Ansatz befestigt ist. Beim Eindrehen der Schraube bis zum befestigten Zustand des Chassis brechen die Bruchstege, wodurch die Scheibe von nun an von der Isolierplatte getrennt ein unverlierbarer Bestandteil der Befestigungsschraube ist.

Der Erfindung liegt daher die Aufgabe zugrunde eine Befestigungsvorrichtung nach dem Oberbegriff des Anspruches 1 zu schaffen, die eine einfache und schnelle Montage ermöglicht und robust ausgeführt ist ohne den Vorteil der Unverlierbarkeit des Distanzstückes zu verlieren.

Die Aufgabe der Erfindung wird durch die kennzeichnenden Merkmale des Anspruches 1 gelöst, während in den Unteransprüchen besonders vorteilhafte Weiterbildungen der Erfindung gekennzeichnet sind.

Durch die massive Ausführung des Distanzstückes wird eine gute Befestigung ermöglicht.

Anhand der Zeichnung, in der ein Ausführungsbeispiel dargestellt ist, sollen die Erfindung, weitere Ausgestaltungen und Verbesserungen der Erfindung und weitere Vorteile näher beschrieben und erläutert werden.

Es zeigt:
- Fig. 1: eine perspektivische Darstellung einer ersten Ausführungsform der Befestigungsvorrichtung,

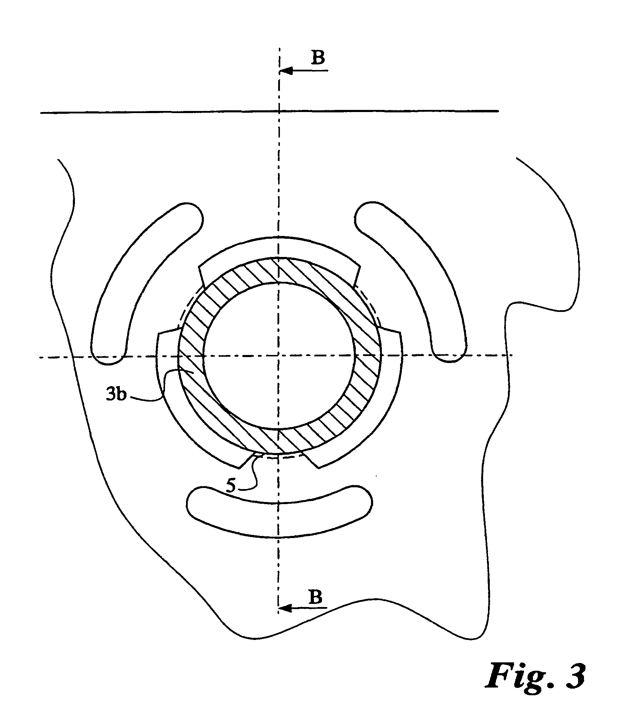

- Fig. 2: eine Schnittdarstellung einer zweiten Ausführungsform der Befestigungsvorrichtung gemäß der Schnittlinie B-B in Fig.3 und
- Fig. 3: eine weitere Schnittdarstellung einer zweiten Ausführungsform der Befestigungsvorrichtung gemäß der Schnittlinie A-A in Fig.2,

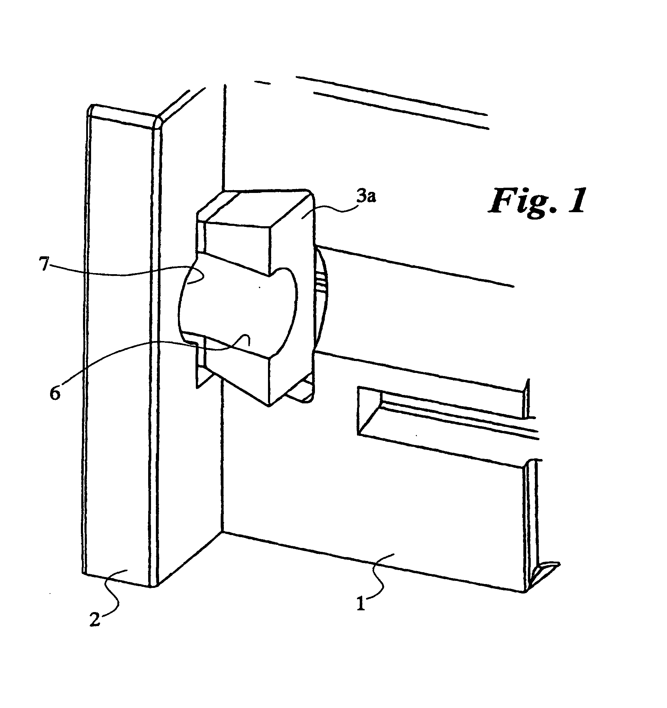

Die Fig. 1 zeigt eine erste Ausführungsform der Befestigungsvorrichtung für ein Schaltgerätegehäuse, insbesondere ein Motorschutzschalter.
Die Befestigungsvorrichtung ist für ein Gehäuse 1 mit einer Schnappvorrichtung zum Aufschnappen auf eine Hutschiene vorgesehen, wobei am Gehäusesockel 2 angeformten Schraubaugen zur Befestigung auf einer Platte angeordnet sind, die mit einem am Gehäusesockel angebrachten Distanzstück 3a versehen ist. Die Unterseite das Gehäusesockels 2 weist zumindest auf einer Seite der Schnappvorrichtung einen abgeschrägten Bereich 4 auf. Die Schraubaugen sind in diesen Bereich 4 jeweils in einem am Gehäusesockel 2 angebrachten Distanzstück 3a integriert, das sich bei der Verschraubung abstützt.

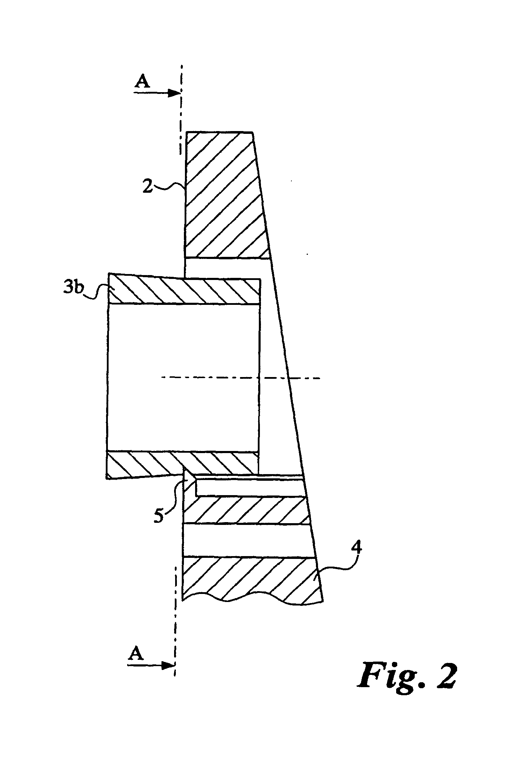

Das Distanzstück 3a ist mit als Sollbruchstellen ausgebildeten Stegen 5 am Gehäusesockel angeformt. Die Stege 5 sind auch in einer zweiten Ausführungsform, die in Fig. 2 gezeigt ist, vorhanden.

Beim Festschrauben durch eine hier nicht dargestellte Schraube brechen die Stege ab, wobei das Distanzstück bis zu der Platte bewegt wird, auf der das Schaltgerät befestigt werden soll. Das Distanzstück 3a, 3b ist konisch geformt, so daß es an dem Gehäusesockel 2 festgeklemmt wird.

Das Distanzstück 3b ist in einer zweiten Ausführungsform ringförmig. Das Distanzstück 3a der ersten Ausführungsform dagegen weist randseitig eine halbkreisförmige erste Einbuchtung 6 auf, wobei der Gehäusesockel 2 eine zweite halbkreisförmige Einbuchtung 7 aufweist, die zusammen mit der ersten Einbuchtung 6 ein kreisförmiges Schraubauge ergibt. Bei dieser Ausführungsform weist das Distanzstück 3a im wesentlichen einen viereckigen Querschnitt auf.

Das Distanzstück 3a ist hierbei asymmetrisch um eine Befestigungsschraube angeordnet.

Der Vorteil der Erfindung, liegt darin, daß das Distanzstück nicht lose beigelegt werden muß, sondern unverlierbar mit dem Gehäuse verbunden ist.

Die vorliegende Erfindung ist nicht auf die vorstehend beschriebenen Ausführungsformen beschränkt, sondern umfaßt auch alle im Sinne der Erfindung gleichwirkenden Ausführungsformen. So läßt sich die Erfindung beispielsweise ein Distanzstück mit anders gestallteten Sollbruchstellen realisieren.
Ferner gehören auch alle in der Zeichnung gezeigten Merkmale zur Erfindung. Insbesondere Geometrie, wie dargestellt.

### Liste der Bezugszeichen

Gehäuse 1
Gehäusesockel 2
Distanzstück 3a, 3b
Bereich 4
Stegen 5
Erste Einbuchtung 6
zweite Einbuchtung 7

## Patentansprüche

1. Befestigungsvorrichtung für ein Gehäuse (1) mit einer Schnappvorrichtung zum Aufschnappen auf eine Hutschiene, mit am Gehäusesockel (2) angeformten Schraubaugen zur Befestigung auf einer Platte und mit einem am Gehäusesockel angebrachten Distanzstück (3), wobei die Unterseite das Gehäusesockels (2) zumindest auf einer Seite der Schnappvorrichtung einen abgeschrägten Bereich (4) aufweist und wobei die Schraubaugen in diesem Bereich (4) jeweils in dem am Gehäusesockel (2) angebrachten Distanzstück (3a, 3b) integriert sind, das sich bei der Verschraubung abstützt, **dadurch gekennzeichnet, daß** das Distanzstück (3a, 3b) mit als Sollbruchstellen ausgebildeten Stegen (5) am Gehäusesockel angeformt ist.

2. Befestigungsvorrichtung nach Anspruch 1, **dadurch gekennzeichnet, daß** das Distanzstück (3a, 3b) konisch geformt ist.

3. Befestigungsvorrichtung nach Anspruch 1 oder 2, **dadurch gekennzeichnet, daß** das Distanzstück (3b) ringförmig ist.

4. Befestigungsvorrichtung nach Anspruch 1 oder 2, **dadurch gekennzeichnet, daß** das Distanzstück (3a) randseitig eine halbkreisförmige erste Einbuchtung (6) aufweist, daß der Gehäusesockel (2) eine zweite halbkreisförmige Einbuchtung (7) aufweist, die zusammen mit der ersten Einbuchtung (6) ein kreisförmiges Schraubauge ergibt.

5. Befestigungsvorrichtung nach Anspruch 1 oder 2, **dadurch gekennzeichnet, daß** das Distanzstück (3a) im wesentlichen einen viereckigen Querschnitt aufweist.

6. Befestigungsvorrichtung nach Anspruch 1 oder 2, **dadurch gekennzeichnet, daß** das Distanzstück (3a) asymmetrisch um eine Befestigungsschraube angeordnet ist.

7. Befestigungsvorrichtung nach einem der vorhergehenden Ansprüche, **dadurch gekennzeichnet, daß** das Distanzstück (3a, 3b) nach Abreißen der Stege (5) an dem Gehäusesockel (2) klemmbar ist.

8. Befestigungsvorrichtung nach einem der vorhergehenden Ansprüche, **dadurch gekennzeichnet, daß** das Gehäuse (1) ein Schaltgerätegehäuse ist.

## Claims

1. Fixing device for a housing (1) with a snap-fitting device for snap-fitting onto a top-hat rail, with screw eyes which are moulded onto the housing base (2) for fixing to a plate, and with a spacer piece (3) mounted on the housing base, the underside of the housing base (2) having a bevelled region (4), at least on one side of the snap-fitting device, and the screw eyes in this region (4) each being integrated into the spacer piece (3a, 3b) which is mounted on the housing base (2) and is self-supporting during the screwing process, **characterized in that** the spacer piece (3a, 3b) is moulded on the housing base with webs (5) formed as predetermined breaking points.

2. Fixing device according to Claim 1, **characterized in that** the spacer piece (3a, 3b) is conically shaped.

3. Fixing device according to Claim 1 or 2, **characterized in that** the spacer piece (3b) is annular.

4. Fixing device according to Claim 1 or 2, **characterized in that** the spacer piece (3a) has at the edge a first semicircular indentation (6), **in that** the housing base (2) has a second semicircular indentation (7), which together with the first indentation (6) produces a circular screw eye.

5. Fixing device according to Claim 1 or 2, **characterized in that** the spacer piece (3a) has a substantially rectangular cross section.

6. Fixing device according to Claim 1 or 2, **characterized in that** the spacer piece (3a) is arranged asymmetrically about a fixing screw.

7. Fixing device according to one of the preceding claims, **characterized in that** the spacer piece (3a, 3b) can be clamped on the housing base (2) after rupturing of the webs (5).

8. Fixing device according to one of the preceding claims, **characterized in that** the housing (1) is a switchgear housing.

## Revendications

1. Dispositif de fixation pour un boîtier (1) comportant un dispositif d'enclenchement pour la fixation par enclenchement sur un rail oméga, comportant des oeillets taraudés façonnés sur une base de boîtier (2) pour permettre la fixation sur une plaque et comportant un espaceur (3) appliqué sur la base du boîtier, dans lequel le côté inférieur de la base de boîtier (2) présente au moins une zone biseautée (4) correspondant au dispositif d'enclenchement et dans lequel les oeillets taraudés dans ladite zone (4) sont intégrés respectivement à l'espaceur (3a,3b) appliqué sur la base du boîtier (2), lequel s'appuie pendant le vissage, **caractérisé en ce que** l'espaceur (3a,3b) est façonné sur la base de boîtier avec des pastilles de montage (5) configurées comme des points de rupture prédéterminés.

2. Dispositif de fixation selon la revendication 1, **caractérisé en ce que** l'espaceur (3a, 3b) est de forme conique.

3. Dispositif de fixation selon la revendication 1 ou 2, **caractérisé en ce que** l'espaceur (3b) est en forme d'anneau.

4. Dispositif de fixation selon la revendication 1 ou 2, **caractérisé en ce que** l'espaceur (3a) présente sur son bord un premier évidement (6) en forme de demi-cercle, **en ce que** la base de boîtier (2) présente un deuxième évidement (7) en forme de demi-cercle, lequel forme conjointement avec le premier évidement (6) un oeillet taraudé en forme de cercle.

5. Dispositif de fixation selon la revendication 1 ou 2, **caractérisé en ce que** l'espaceur (3a) présente essentiellement une section transversale à quatre angles.

6. Dispositif de fixation selon la revendication 1 ou 2, **caractérisé en ce que** l'espaceur (3a) est disposé asymétriquement autour d'une vis de fixation.

7. Dispositif de fixation selon une des revendications précédentes, **caractérisé en ce que** l'espaceur (3a, 3b) peut être collé sur la base de boîtier (2) après l'enlèvement des pastilles de montage (5).

8. Dispositif de fixation selon une des revendications précédentes, **caractérisé en ce que** le boîtier (1) est un boîtier d'équipement de commutation.
